# EUROPÄISCHE PATENTSCHRIFT

(11) **EP 2 052 695 B1**
(45) Veröffentlichungstag und Bekanntmachung des Hinweises auf die Patenterteilung: **12.05.2010**
(21) Anmeldenummer: 07020803.8
(22) Anmeldetag: 24.10.2007
(51) Int. Cl.: A61C 15/00, A46B 7/04, A46B 3/18

(54) **Interdentales Zahnreinigungsgerät**
Interdental tooth cleaning device
Appareil de nettoyage de interdentaire

(43) Veröffentlichungstag der Anmeldung: 29.04.2009
(73) Patentinhaber: Trisa Holding AG, 6234 Triengen (CH)
(72) Erfinder: Pfenniger, Philipp, 6234 Triengen (CH)
(74) Vertreter: Schaad, Balass, Menzl & Partner AG

(56) Entgegenhaltungen:
- EP-A- 0 800 781
- WO-A-00/56185
- DE-A1- 10 162 998
- US-A- 5 435 033
- US-A- 5 682 911
- US-A1- 2005 032 019

## Beschreibung

Die vorliegende Erfindung betrifft ein Zahnreinigungsgerät mit einem Handgriff und einem relative zum Handgriff beweglichen Befestigungselement gemäss dem Oberbegriff des Anspruchs 1.

Zur Reinigung von Zahnzwischenräumen werden, neben Zahnstochern oder Zahnseide, auch Zahnreinigungsgeräte mit auswechselbaren Interdental-Behandlungsteilen, z. B. in Form eines, von einem Stiel getragenen, Behandlungskopfs verwendet. Zahnreinigungsgeräte mit auswechselbaren Interdental-Behandlungsteilen bieten den Vorteil, dass der Handgriff mit dem Befestigungselement für mehrere Anwendungen genutzt werden kann, währenddessen lediglich das Interdental-Behandlungsteil ersetzt wird.

Ein solches Zahnreinigungsgerät ist zum Beispiel aus der DE-A-101 62 998 bekannt. Es weist einen Handgriff auf, der ein Interdental-Behandlungsteil aufnehmen kann. Der Stiel des Interdental-Behandlungsteiles ist in Längsrichtung des Handgriffs einlegbar. Ein Befestigungselement ist mit dem Handgriff schwenkbar verbunden. Durch das Schwenken des Befestigungselements in den geschlossenen Zustand wird der Stiel des Interdental-Behandlungsteiles gebogen und fixiert.

Weitere Zahnreinigungsgeräte sind aus US 5,283,924, EP 1 743 547 und US 5,934,295 bekannt. Bei den bekannten Zahnreinigungsgeräten wird der Stiel des Interdental-Behandlungsteils jeweils auf eine ähnliche Art eingeklemmt, wie beispielsweise mit einer Kappe, die über den Handgriff gestülpt wird.

Im geschlossenen Zustand klemmt das Befestigungselement den Stiel des Interdental-Behandlungsteiles satt fest. Üblicherweise besteht der Stiel aus einem Draht aus zwei verdrillten Strängen und der Stiel weist einen Stiel-Durchmesser von ca. 0.48 mm bis 0.75 mm. Zur Reinigung enger Zahnzwischenräume besteht das Bedürfnis einen Draht kleineren Durchmessers und somit einen Stiel mit einem geringeren Stiel-Durchmesser einzusetzen. Dies führt zum Problem, dass bekannte Handgriffe für Interdental-Behandlungsteile nicht mehr verwendet werden können bzw. das Interdental-Behandlungsteil nicht mehr sicher zwischen dem beweglichen Befestigungselement und dem Handgriff fixiert werden kann.

Dokument US2005/0032019 A1 offenbart ein Zahnreinigungsgerät mit einem Handgriff, einem relativ zum Handgriff beweglichen Befestigungselement und einem auswechselbaren Interdental-Behandlungsteil, das einen von einem aus Draht gefertigten Stiel getragenen Behandlungskopf aufweist, wobei der Draht am vom Behandlungskopf abgewandten Ende des Stiels derart gebogen ist, dass der Draht über einen Abschnitt des Stiels doppelt geführt ist.

Der vorliegenden Erfindung liegt die Aufgabe zu Grunde, ein Zahnreinigungsgerät mit einem Interdental-Behandlungsteil bereitzustellen, welches dank einem dünnem Drahtdurchmesser für schmale Zahnzwischenräume geeignet ist und trotzdem mittels eines Befestigungselements sicher an einem Handgriff fixiert werden kann.

Diese Aufgabe wird erfindungsgemäss durch ein Zahnreinigungsgerät mit den Merkmalen von Anspruch 1 gelöst.

Bevorzugte weitere Ausführungsformen der Erfindung ergeben sich aus den abhängigen Ansprüchen.

Das Befestigungselement im geschlossenen Zustand und der Handgriff als Gegenstück fixieren das Interdental-Behandlungsteil. Da der Draht, aus dem der Stiel gefertigt ist, in einem Abschnitt des Stiels doppelt geführt ist, kann ein herausziehen verhindert werden. Der Abschnitt mit doppelt geführtem Draht erlaubt die sichere Fixierung des erfindungsgemässen Interdental-Behandlungsteiles mit Handgriffen und Befestigungselementen, welche für Interdental-Behandlungsteile mit einem Stiel aus dickerem Draht vorgesehen sind. Das Zusammenwirken eines freien Ende des Drahtes, aus dem der Stiel gefertigt ist, mit einer Anschlagsfläche des Befestigungselementes im geschlossenen Zustand und/oder des Handgriffes verhindert ein Herausziehen des Interdental-Behandlungsteiles. Das freie Ende des Drahtes wirkt dabei wie ein Widerhaken.

In besonders bevorzugten Ausführungsformen ist der Draht, aus welchem das Interdental-Behandlungsteil gefertigt ist, zu zwei Strängen umgebogen, welche verdrillt sind. Der Drahtabschnitt besteht vorzugsweise aus einem Stahl, welcher Eisen, Kohlenstoff, Silizium, Mangan, Schwefel, Chrom, Stickstoff und Nickel enthält und ist mit einer Beschichtung oder Lackierung versehen. Bei weiteren bevorzugten Ausführungsformen ist die Beschichtung des Drahtes bzw. der Stränge bei Gebrauch des Zahnreinigungsgerätes teilweise auflösbar und setzt dabei Wirkstoffe frei oder ist als Matrix für freisetzbare Wirkstoffe ausgebildet.

Die Erfindung wird im folgenden anhand des in der Zeichnung auszugsweise und teilweise schematisch dargestellten Ausführungsbeispieles nähe erläutert.

Es zeigen rein schematisch:
- Fig. 1: eine perspektivische Ansicht eines, Stand der Technik gemäss der DE-A-101 62 998 bildenden, Zahnreinigungsgeräts im geöffneten Zustand,
- Fig. 2: eine perspektivische Ansicht eines Interdental-Behandlungsteiles für ein erfindungsgemässes Zahnreinigungsgerät;
- Fig. 3: eine perspektivische Ansicht eines erfindungsgemässen Zahnreinigungsgerätes mit eingeführtem erfindungsgemässen Interdental-Behandlungsteil mit geradem Stiel;
- Fig. 4: eine weitere perspektivische Ansicht eines erfindungsgemässen Zahnreinigungsgerätes mit eingeführtem erfindungsgemässen Interdental-Behandlungsteil mit gebogenem Stiel; und
- Fig. 5: einen Längsschnitt durch ein erfindungsgemässes Zahnreinigungsgerät mit eingeführtem erfindungsgemässen Interdental-Behandlungsteil mit gebogenem Stiel im geschlossenen Zustand.

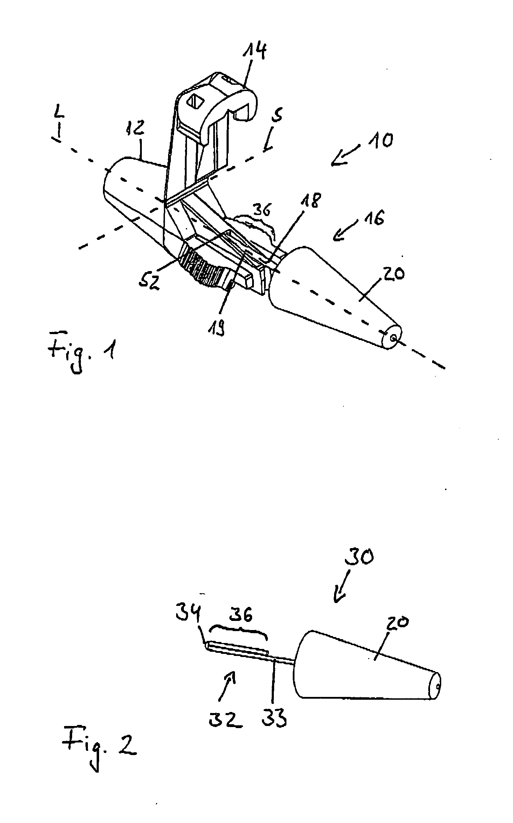

Fig. 1 zeigt beispielhaft in perspektivischer Ansicht ein, aus der DE-A-101 62 998 bekanntes, Zahnreinigungsgerät 10. Die folgenden Ausführungen gelten analog auch für andere Zahnreinigungsgeräte beispielsweise aus den in der Einleitung angeführten Patentschriften US 5, 283, 924, EP 1 743 547 und US 5, 934, 295 welche ebenfalls mit einem beweglichen Befestigungselement 14 zur Fixierung des Stiels 18 des Interdental-Behandlungsteils 16 ausgerüstet sind. Diese Patentschriften sind als Referenz hinzugefügt. Ein teilweise gezeigter Handgriff 12 definiert eine Längsachse L und weist ein schwenkbares Befestigungselement 14 auf, welches um eine, als Filmscharnier ausgeführte, Schwenkachse S geschwenkt werden kann. Das Befestigungselement 14 ist im geöffneten Zustand gezeigt.

Ein Interdental-Behandlungsteil 16 weist einen bekannten Stiel 18 und einen von diesem getragenen Behandlungskopf 20 auf. Der Behandlungskopf 20 ist in Fig. 1 als Bürste gezeigt. Der Behandlungskopf 20 kann aber auch als ein beliebiges anderes Element zur Reinigung der Zahnzwischenräume ausgebildet sein. Ein Einlegeabschnitt 36 des bekannten Stiels 18 lässt sich in Richtung der Längsachse L des Handgriffs 12 in eine Einlegenut 19 des Handgriffs 12 einlegen und in das Sackloch 52 einfahren. Durch Schwenken des Befestigungselementes 14 in den geschlossenen Zustand wird der bekannte Stiel 18 rechtwinklig verbogen und am Handgriff 12 fixiert. Bezüglich Aufbau und Funktionsweise sei ausdrücklich auf die DE-A-101 62 998 verwiesen und deren Offenbarung per Referenz hiermit hinzugefügt.

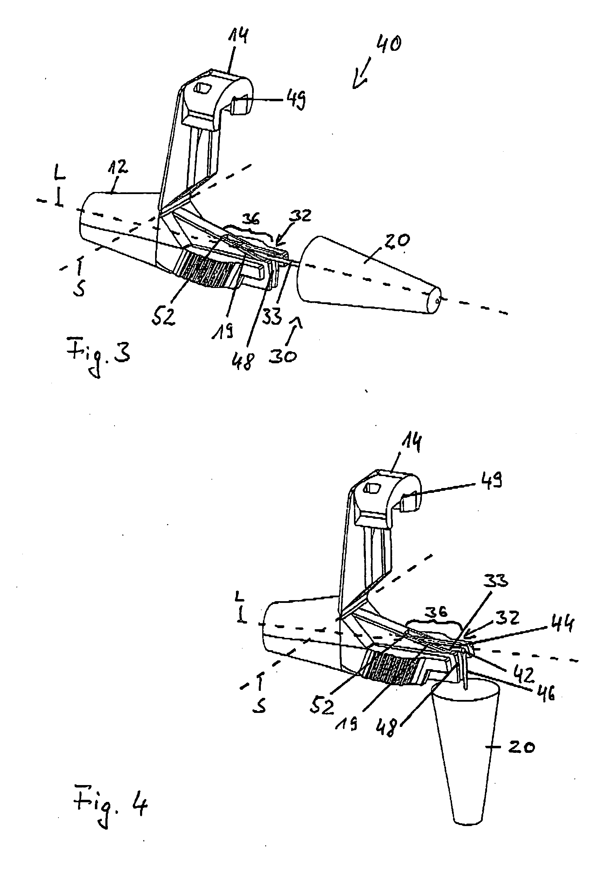

Fig. 2 zeigt eine perspektivische Ansicht eines Interdental-Behandlungsteiles 30 für ein Zahnreinigungsgerät 40 (siehe auch Fig. 3 und 4). Das erfindungsgemässe Interdental-Behandlungsteil 30 erlaubt die Verwendung von Handgriffen 12 und Befestigungselementen 14, welche für Interdental-Behandlungsteile 16 mit bekanntem Stiel 18 vorgesehen sind. Das Interdental-Behandlungsteil 30, weist einen, als Bürste ausgeführten, Behandlungskopf 20 und einen Stiel 32 auf. Der Stiel 32 ist aus Draht 33 gefertigt. Ein vom Behandlungskopf 20 abgewandter Endabschnitt des Drahtes 33 ist um einen Winkel von grösser 90° vorzugsweise um einen Winkel zwischen 160° und 180° am meisten bevorzugt um 180° umgelegt. Der Draht 33 bildet so ein umgebogenes Ende 34 des Stiels 32. Die Länge des umgebogenen Endabschnitts des Drahtes 33 definiert die Länge des doppelt mit Draht 33 geführten Abschnitts 36, welcher auch den Einlegeabschnitt 36 bildet. Der Einlegeabschnitt 36 wird in den Handgriff 12 bei geöffnetem Zustand des Befestigungselementes 14 eingelegt.

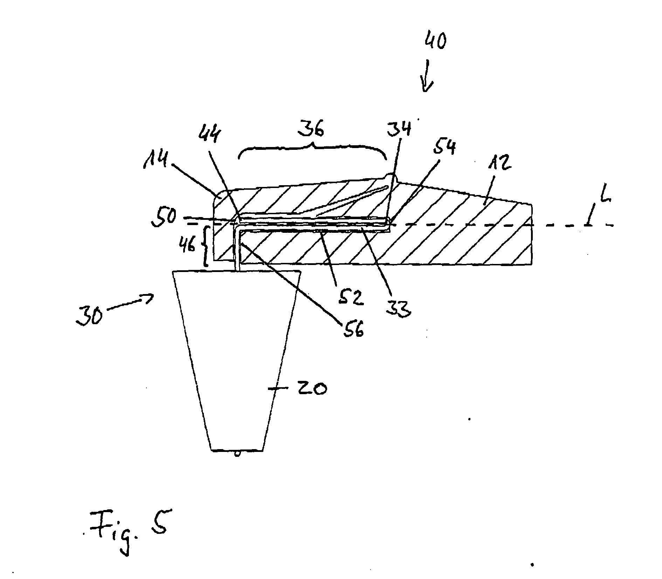

In Fig. 3 ist das erfindungsgemässe Interdental-Behandlungsteil 30 zwischen dem Befestigungselement 14 im geöffneten Zustand und dem Handgriff 12 in die Einlegenut 19 des Handgriffs 12 in Richtung der Längsachse L eingelegt. Die Einlegenut 19 geht in ein Sackloch 52 (siehe auch Fig. 5) über. Der Einlegeabschnitt 36 befindet sich mindestens teilweise in dem Sackloch 52 und liegt mit dem umgebogenen Ende 34 wenigstens annähernd am Boden 54 des Sacklochs 52 an. Dadurch lässt sich das Interdental-Behandlungsteil 30 sicher und wohldefiniert in den Handgriff 12 einlegen. Zusätzlich wird das Interdental-Behandlungsteil 30 gehalten, wenn sich das Befestigungselement 14 im geöffneten Zustand befindet und erlaubt das Schwenken des Befestigungselementes 14 in den geschlossenen Zustand, ohne dass das Interdental-Behandlungsteil 30 mit einer Hand festgehalten werden muss. Der Behandlungskopf 20 steht entlang der Längsachse L über den Handgriff 12 hervor.

Fig. 4 zeigt das erfindungsgemässe Zahnreinigungsgerät 40, nach dem das Befestigungselement 14 durch Schwenken um die Schwenkachse S in den geschlossenen und nachfolgend wieder in den geöffneten Zustand überführt wurde. Durch das Schliessen des Befestigungselements 14 wurde der Stiel 32 in einem zwischen dem Einlegeabschnitt 36 und dem Behandlungskopf 20 liegendem Biegeabschnitt 42 um wenigstens annährend 90°, vorzugsweise zwischen 60° und 90°, gebogen. Somit weist der Behandlungskopf 20 in eine Richtung zumindest annähernd senkrecht zur Längsachse L des Handgriffs 12. Ein freies Ende 44 des Drahtes 33 des Stiels 32 befindet sich beim Biegeabschnitt 42, sodass die Länge des Einlegeabschnitts des Stiels 36 im wesentlichen der Länge zwischen dem umgebogenen Ende 34 und dem Biegeabschnitt 42 entspricht. Das freie Ende 44 besteht aus den zwei Enden der verdrillten Stränge. Ein Stielabschnitt 46 zwischen dem Biegeabschnitt 42 und dem Behandlungskopf 20 liegt nun in einer Stirnnut 48 des Handgriffs 12. Die Stirnnut 48 verläuft senkrecht zur Einlegenut 19 und somit senkrecht zur Längsachse L. Das Befestigungselement 14 weist eine zur Stirnnut 48 komplementäre Nut 49 auf. Befindet sich das Befestigungselement 14 im geschlossenen Zustand, so bilden die Stirnnut 48 und die komplementäre Nut 49 einen Kanal 56 durch den der Stielabschnitt 46 geführt wird. (siehe auch Fig. 5)

Fig. 5 zeigt einen Längsschnitt durch ein erfindungsgemässes Zahnreinigungsgerät 40. Das Befestigungselement 14 befindet sich im geschlossenen Zustand. Der Biegeabschnitt 42 ist um annährend 90° gebogen und der Behandlungskopf 20 zeigt in eine zur Längsrichtung L senkrechte Richtung. Der Einlegeabschnitt 36 und der Stielabschnitt 46 sind zumindest teilweise zwischen dem Handgriff 12 und dem Befestigungselement 14 eingeklemmt. Erst die erfindungsgemässe doppelte Führung des Drahtes 33 im Einlegeabschnitt 36 erlaubt ein festklemmen des Einlegeabschnittes 36 zwischen dem Handgriff 12 und dem Befestigungselement 14, welche für bekannte Stiele 18 ausgebildet sind.

Das freie Ende 44 des Drahtes 33 wirkt mit einer Anschlagsfläche 50 zusammen. Die Anschlagfläche 50 wird vom Boden der komplementären Nut 49 gebildet. Somit wird das Interdental-Behandlungsteil 30 erfindungsgemäss zwischen Handgriff 12 und Befestigungselement 14 fixiert. Ein herausrutschen des Interdental-Behandlungsteils 30 wird durch das Zusammenwirken des freien Endes 44 mit der Anschlagsfläche 50 verhindert. Die exakte Lage des freien Endes 44 bezüglich der Umfangsrichtung des Stiels 32 spielt keine Rolle. Ein Benutzer muss beim Einlegen des Interdental-Behandlungsteiles 30 in den Handgriff 12 nicht auf die Drehlage des Stiels 32 achten.

Die Einlegenut 19 und das Sackloch 52 erleichtern das Einlegen des erfindungsgemässen Interdental-Behandlungsteils 30. Der doppelt geführte Einlegeabschnitt 36 wirkt mit dem Sackloch 52 genauso zusammen, wie der Einlegeabschnitt 36 eines bekannten Stiels 18. Damit ist sicher gestellt, dass das erfindungsgemässe Interdental-Behandlungsteil 30 im Handgriff 12 gehalten wird, bis es durch das Befestigungselement 14 im geschlossenen Zustand zwischen Handgriff 12 und Befestigungselement 14 fixiert ist. Um fabrikationsbedingte Längentoleranzen des Stiels 18 aufzufangen, wird vorgeschlagen, zwischen dem freien Ende 44 des Drahtes 33 und der Anschlagsfläche 50 ein Spiel vorzusehen. Vorzugsweise ist dieses Spiel kleiner 3mm, in weiter bevorzugter Weise kleiner 1 mm.

Durch das Zusammenwirken des freien Endes 44 mit der Anschlagfläche 50 ist es möglich, in einer weiteren nicht gezeigten Ausführungsform des erfindungsgemässen Zahnreinigungsgerätes einen anders ausgebildeten Handgriff mit einem anders ausgebildeten Befestigungselement so auszuführen, dass der Stiel 32 im geschlossenen Zustand des anders ausgebildeten Befestigungselementes nicht gebogen ist und der Behandlungskopf 20 in Richtung der Längsachse L zeigt. Das erfindungsgemässe Interdental-Behandlungsteil 30 wird trotzdem sicher durch das Zusammenwirken des freien Endes 44 mit der Anschlagsfläche 50 fixiert.

In einer weiteren nicht gezeigten Ausführungsform ist es auch möglich, die Anschlagsfläche 50 am Handgriff 12 selbst auszubilden. Selbstverständlich kann die Anschlagsfläche 50 auch durch ein anderes Element des Handgriffes 12 oder des Befestigungselementes 12 gebildet werden. Der Winkel des umgebogenen Drahtes 33 zusammen mit dem Sackloch 52 oder der Einlegegeometrie definiert schlussendlich die Position der Anschlagsfläche 50; bzw. diese Elemente sind direkt voneinander abhängig.

Der Schliessmechanismus des Befestigungselementes 14 am Handgriff 12 und weitere Ausführungsformen von Handgriffen und Befestigungselementen, die für ein erfindungsgemässes Zahnreinigungsgerät 40 geeignet sind, sind in DE-A-101 62 998 beschrieben. Des weiteren kann das erfindungsgemässe Interdental-Behandlungsteil auch in Handgriffen Anwendung finden, die beispielsweise in US 5,283,924, EP 1 743 547 und US 5,934,295 beschrieben sind.

Durch das erfindungsgemässe Umbiegen des Drahtes 33 und dessen Zusammenspiel mit der Anschlagsfläche 50 kann ein massiv höheres Auszugsgewicht erreicht werden. Bei der Messung wird der Handgriff 12 gehalten und am Behandlungskopf 20 wird gezogen. Dabei ist das Auszugsgewicht für identische Draht-Durchmesser zwischen geradem Ende und umgebogenem Ende massiv unterschiedlich. Von der Norm werden 15 N Auszugsgewicht verlangt. Mit dem umgebogenen Ende werden Auszugsgewichte erreicht, die mindestens 1.5 mal so gross sind wie von der Norm gefordert, vorzugsweise mindestens 2 mal so gross sind.

Der Draht 33 des erfindungsgemässen Interdental-Behandlungsteiles 30 wird vorzugsweise aus einem Drahtabschnitt hergestellt, welcher zu zwei Strängen umgebogen ist. Vorgebündelte Filamente werden in bekannter Art und Weise beim gebogenen Ende der zwei Stränge des umgebogenen Drahtabschnitts eingelegt und zugeschnitten. Anschliessend werden die zwei Stränge des umgebogenen Drahtabschnitts miteinander verdrillt. Für das Verdrillen werden 8 bis 20 Windungen pro cm, vorzugsweise 10 bis 15 Windungen pro cm ausgeführt. Nach dem Verdrillen werden die zwischen den Strängen fixierten Filamente profiliert d.h. auf jene Aussenform angepasst, die für die Reinigung optimal ist. Dadurch entsteht ein, als Bürste ausgeführter, Behandlungskopf 20, welcher von einem Stiel 32 getragen wird, welcher aus einem Draht 33 aus zwei verdrillten Strängen gefertigt ist. Selbstverständlich kann die vorliegende Erfindung auch für alternative Behandlungsköpfe (beispielsweise aus Schaumstoff, Gummi, etc.) oder Stielen aus Draht mit nur einem oder mehr als zwei Strängen eingesetzt werden. Nach dem Verdrillen der Stränge wird zur Herstellung eines Interdental-Behandlungsteils 30 gemäss der vorliegenden Erfindung der vom Behandlungskopf 20 abgewandte Endbereich des Drahtes 33 umgelegt. Das Biegen des Drahtes 33 wird vorzugsweise als weiterer, integrierter Arbeitschritt nach dem Eindrehen der Filamente auf der Eindrehmaschine zur Herstellung des Behandlungskopfes 20 durchgeführt. Bei alternativen Behandlungsköpfen 20 kann das Umbiegen des Drahtes 33 vor oder nach dem Anbringen des Behandlungskopfes 20 am Stiel 32 passieren. Das Umbiegen passiert analog dem Umbiegen des Drahtes aus zwei verdrillten Strängen. So entsteht ein zwischen 5 mm und 25 mm vorzugsweise zwischen 7 mm und 15 mm langer doppelt mit Draht 33 geführter Einlegeabschnitt 36 des Stiels 32.

Der Handgriff 12 mit dem mit einem Filmscharnier verbundenen schwenkbaren Befestigungselement 14, ist vorzugsweise aus einem nicht spröden Hartkunststoff, hergestellt. Falls das Befestigungselement 14 eine separate Einheit bildet, wird ebenfalls ein Hartkunststoff empfohlen. Ausserhalb des Mechanismus oder im Mechanismus in nicht-funktionalen Geometrien kann die Hartkomponente mit weiteren harten oder weichen Kunststoffkomponenten überspritzt werden. Als Hartkunststoff werden beispielsweise Polypropylen (PP), Polyester (PET), Polycyclohexandiamethanoltherephtalat (PCT/PCT-A (säuremodifiziert)/PCT-G (glykolmodifiziert)), Polyethylen (PE), Polystyrol (PS), Styrolacrylnitril (SAN), Polymethylmethacrylat (PMMA), Acrylbuthadienstyrol (ABS), Polyoxymethylen (POM) oder Polyamid (PA) usw., vorzugsweise Polypropylen (PP) eingesetzt. Das bevorzugt eingesetzte Polypropylen (PP) besitzt ein E-Modul von 1000 - 2400 N/mm², besonders bevorzugt von 1300 - 1800 N/mm².
Als Weichkunststoff finden Polyvinylchlorid (PVC), Polyethylen (PE), mit tiefer Dichte (PE-LD, low density polyethelene) oder hoher Dichte (PE-HD, high density polyethelene), gummielastischer Werkstoff wie Polyurethan (PUR) oder insbesondere thermoplastische Elastomere (TPE) Anwendung. Vorzugsweise werden thermoplastische Elastomere eingesetzt. Die Shore A-Härte der weichen Komponente liegt vorzugsweise unter 90. Der Weichkunststoff kann eine zusätzliche Funktion zur Fixierung des Stiels 32 bereitstellen, indem der Weichkunststoff zumindest in einem Teilbereich den Stiel 32 berührt und damit eine Art Bremse bildet. Vorzugsweise bildet das Weichmaterial dabei einen verengenden Bereich um die Reibung gegenüber dem Stiel zu maximieren.

Das fertige erfindungsgemässe Interdental-Behandlungsteil 30 hat eine Gesamtlänge von 15 mm bis 45 mm, vorzugsweise von 25 mm bis 35 mm. Der Behandlungskopf 20 ist zwischen 8 mm und 20 mm lang, vorzugsweise zwischen 10 mm und 16 mm. Der Aussendurchmesser des Behandlungskopfes 20 beträgt zwischen 1 mm und 7 mm vorzugsweise zwischen 2 mm und 5 mm. Die Borstenspitzen eines, als Bürste ausgeführten, Behandlungskopfes 20 können eine zylindrische, konische oder beliebig gewellte Mantelfläche bilden. Für ein, als Bürste ausgeführtes, erfindungsgemässes Interdental-Behandlungsteil 30 eignet sich als Borstenmaterial insbesondere Polytrimethylenterephtalat (PTT), Polyamid (PA) oder Polyester (PE), vorzugsweise Polyamid (PA). Die Borsten bestehen aus Filamenten mit einem Durchmesser zwischen 1 mil bis 6 mils, vorzugsweise zwischen 1.5 mils und 4 mils besonders bevorzugt 2.5 mils (wobei 1 mil = 0.0254 mm).

Der die Stränge bildende Drahtabschnitt, von welchem im Prozess ausgegangen wird, weist vor dem Verdrillen einen Durchmesser von vorzugsweise kleiner oder maximal gleich 0.25 mm auf. Der Gesamtdurchmesser des Drahts 33 aus einem oder mehrer verdrillten Strängen beträgt mitsamt der Beschichtung vorzugsweise weniger als 0.47 mm.

Der Draht 33 bzw. der Drahtabschnitt besteht vorzugsweise aus Stahl, welcher Eisen (Fe), Kohlenstoff (C), Silizium (Si), Mangan (Mn), Schwefel (S), Chrom (Cr), Nickel (Ni) und Stickstoff (N) enthält. Der Mangangehalt ist vorzugsweise kleiner als 2 Gewichtsprozent und der Nickelgehalt liegt vorzugsweise zwischen 7 und 12 Gewichtsprozent. Auch die Verwendung von nickelfreien Stählen, wie sie in der EP 1 470 765 beschrieben sind, ist möglich. Ebenso können Stähle, wie sie in EP 0 800 781 beschrieben sind, verwendet werden. Diese beiden Schriften werden hiermit explizit referenziert.

Vorzugsweise liegt der Kohlenstoffgehalt des Stahls zwischen 0.03 und 0.07 Gewichtsprozent, der Siliziumgehalt zwischen 0.3 und 0.4 Gewichtsprozent, der Schwefelgehalt kleiner 0.01 Gewichtsprozent, der Chromgehalt liegt zwischen 16 und 19 Gewichtsprozent und der Stickstoffgehalt liegt zwischen 0.02 und 0.05 Gewichtsprozent, die Gewichtsanteile von Mangan und Nickel sind vorgängig angegeben. Es sind aber auch andere bekannte Stahllegierungen möglich bzw. die Kombination von verschiedenen Gewichtsanteilen der üblichen Stahlbestandteile, so dass ein stabiler und flexibler Stiel 32 für ein erfindungsgemässes Interdental-Behandlungsteil 30 daraus hergestellt werden kann. Diese Legierungen erlauben es gleichzeitig den Eindrehprozess rationell durchzuführen und den Draht anschliessend entsprechend der Fig. 2 abzubiegen.

Vorzugsweise ist der Draht 33 bzw. der Drahtabschnitt beschichtet. Für die Beschichtung eignen sich Elektroisolierlacke, wie beispielsweise Polyurethan (PUR) besonders gut. Daneben sind auch Beschichtungen aus Polytetrafluorethylen (PTFE)/Teflon gut geeignet. Trägermaterialien, die sich bei Gebrauch des Zahnreinigungsgerätes 40 teilweise auflösen und dabei insbesondere Wirksubstanzen freisetzen oder den Benutzungsgrad des Interdental-Behandlungsteils 30 anzeigen oder als Trägermatrix für freizusetzende Wirkstoffe dienen, stellen weitere Möglichkeiten für Beschichtungen dar. Neben einer schonenden Reinigung kann mit diesen Beschichtungen auch der Reibungskoeffizient zwischen dem Stiel 18 und Handgriff 11 bzw. dem Befestigungselement 14 angepasst werden.

Schichtdicken der Beschichtungen sind üblicherweise kleiner 20 µm und liegen vorzugsweise im Bereich zwischen 5 µm und 10 µm.

Die Beschichtung dient als elektrische Isolation und gegebenenfalls als Gleitoberfläche. Die elektrische Isolation verhindert den sogenannten galvanischen Schock bei Berührung von Metall und Zahn. Bei nickelhaltigen Stählen wird durch die Beschichtung zusätzlich eine mögliche allergische Reaktion verhindert.

Als Wirksubstanzen können Inhaltstoffe mit einer zahnpastaähnliche Wirkung, wie zum Beispiel Sorbitol, Aromen, Hydrated Silica, Sodium Lauryl Sulfate, Triclosan, Glycerin, Sodium Saccharin, Propylene Glycol, Disodium Phosphate, Alumina, Trisodium Phosphate, Monofluorophosphate, Sodium Flouride, Betaine, Titanium Dioxide, Cellulose Gum, Tetrasodium Pyrophosphate, Kreatin, Zink Sulfate, Amin Fluorid oder ähnliche verwendet werden.

Es können auch antibakterielle Wirkungen mit Hilfe von Inhaltsstoffen wie Sodium Bicarbonat, Citric Acid, Phosporic Acid, Sodium Carbonate, Potassium Carbonate, Sodium Perborate, Sodium Hexametaphosphate, Sodium Benzoate, Sodium Stereate und/oder ähnlichen Stoffen erzeugt werden.

Zusatzstoffe, wie Glucose, Maltrodextrin, Magnesium Sterate, Aroma, Saccharin, Microcrystaline Cellulose und ähnliche Mittel, welche den Plaque einfärben und somit den Putzerfolg anzeigen, können ebenso verwendet werden, wie Mittel zur Zahnbleichung, wie zum Beispiel wasserstoffperoxidhaltige Stoffe.

Zur Beschichtung ebenso geeignet sind Kombinationen von untereinander verträglichen Substanzen, welche vorgängig genannt sind.

Als Trägermaterial für die Wirksubstanzen, die sich nicht direkt auf den Draht 33 bzw. Drahtabschnitt auftragen lassen, können zum Beispiel biologisch abbaubare Substanzen auf Stärke-Basis oder andere geeignete Kunststoffe verwendet werden, welche mit den Inhaltsstoffen chemisch nicht reagieren. Zum Beispiel eignet sich auch ein wasserlösliches Kunstharz auf Basis von Polyethylenoxid-Polymeren, welches eine Matrix für eine Wirksubstanz bildet oder Polyethylenglykol (PEG).

Die verschiedenen Beschichtungen können mittels unterschiedlicher Methoden aufgetragen werden. Eine Möglichkeit stellt das Anspritzen der Beschichtung dar, der Kunststoffmantel wird mittels Spritzguss auf den Draht oder Drahtabschnitt aufgetragen.

Die Beschichtungen, das heisst die Lacke und auch die anderen Substrate, können eingefärbt sein. Die Einfärbung wie auch die Beschichtung wird vorzugsweise mit nicht toxischen, speichelechten, nicht migrierenden, lebensmitteltauglichen Farben / Materialien vorgenommen.

Der Draht mit der beschriebenen Drahtzusammensetzung und auch die beschriebenen Beschichtungsmöglichkeiten für Drähte können auch in beliebigen anderen Zahnreinigungsgeräten eingesetzt werden. Insbesondere ist auch ein Einsatz des Drahtes im Zusammenhang mit direkt angespritzten Kunststoffpartien beispielsweise direkt angespritzten Griffen oder Griffpartien denkbar.

Die erfinderische Idee umfasst neben den Interdental-Behandlungsteilen 30 mit geradem Stiel 32 welche gebogen werden ebenso Interdental-Behandlungsteile 30, welche in einem ähnlichen Befestigungsmechanismus eingebracht werden, aber bereits vor dem einbringen in den Mechanismus in einem Biegeabschnitt 42 gebogen sind.

Die beschriebene erfinderische Idee umfasst neben den Stielen 32 mit einmal umgebogenen Endbereichen auch Stiele 32, welche aus einem Draht 33 gefertigt sind, der mehrfach gebogen ist, das heisst, wo im Einlegeabschnitt 36 der Draht mehr als 2-fach geführt ist. Konkret beispielsweise ist der Draht 3-fach geführt, wenn der Draht 33 im Einlegeabschnitt 36 zum Beispiel die Form eines Z hat.

Die erfinderische Idee kann ebenso für andere Bürsten vorgesehen werden, welche im Körperpflegebereich Anwendung finden und von kleineren Stieldurchmessern profitieren. Als Beispiel hierfür seien Maskara-Bürsten genannt.

## Patentansprüche

1. Zahnreinigungsgerät (40) mit einem Handgriff (12), einem relativ zum Handgriff (12) beweglichen Befestigungselement (14) und einem auswechselbaren Interdental-Behandlungsteil (30), das einen von einem aus Draht (33) gefertigten Stiel (32) getragenen Behandlungskopf (20) aufweist, wobei der Stiel (32) durch eine Schliessbewegung des Befestigungselementes (14) in einen geschlossenen Zustand am Handgriff (12) fixiert wird, **dadurch gekennzeichnet, dass** der Draht (33) am vom Behandlungskopf (20) abgewandten Ende (34) des Stiels (32) derart gebogen ist, dass der Draht (33) wenigstens über einen Abschnitt (36) des Stiels (32) zumindest doppelt geführt ist.

2. Zahnreinigungsgerät (40) nach Anspruch 1, **dadurch gekennzeichnet, dass** ein freies Ende (44) des Drahtes (33), im geschlossenen Zustand des Befestigungselementes (14), mit einer Anschlagsfläche (50) des Befestigungselementes (14) und/oder des Handgriffs (12) zusammenwirkt.

3. Zahnreinigungsgerät (40) nach Anspruch 1 oder 2, **dadurch gekennzeichnet, dass** der Stiel (32), im geschlossenen Zustand des Befestigungselements (14), zwischen dem Abschnitt (36), in welchem der Draht (33) doppelt geführt ist, und dem Behandlungskopf (20) in einem Biegeabschnitt (42) gebogen ist.

4. Zahnreinigungsgerät (40) nach Anspruch 2 und 3,
**dadurch gekennzeichnet, dass** sich das freie Ende (44) des Drahtes (33) beim Biegabschnitt (42) befindet.

5. Zahnreinigungsgerät (40) nach einem der vorherigen Ansprüche, **dadurch gekennzeichnet, dass** der Draht (33) durch wenigstens zwei, miteinander verdrillter Stränge gebildet ist.

6. Zahnreinigungsgerät (40) nach Anspruch 5, **dadurch gekennzeichnet, dass** die Stränge des Drahts (33) - vor dem Verdrillen und ohne Beschichtung - einen Durchmesser von kleiner oder gleich 0.25 mm aufweisen.

7. Zahnreinigungsgerät (40) nach einem der vorherigen Ansprüche, **dadurch gekennzeichnet, dass** der Abschnitt (36), in welchem der Draht (33) zumindest doppelt geführt ist, zwischen 5 mm und 25 mm lang ist, vorzugsweise zwischen 7 mm und 15 mm.

8. Zahnreinigungsgerät (40) nach einem der vorherigen Ansprüche, **dadurch gekennzeichnet, dass** das Befestigungselement (14) im geschlossenen Zustand den Abschnitt (36), in welchem der Draht (33) zumindest doppelt geführt ist, am Handgriff (12) festklemmt.

9. Zahnreinigungsgerät(40) nach einem der vorherigen Ansprüche, **dadurch gekennzeichnet, dass** der Abschnitt (36), in welchem der Draht (33) doppelt geführt ist, in einem geöffneten Zustand des Befestigungselements (14) in Längsrichtung (L) des Handgriffes (12) in diesen einlegbar ist und im geschlossenen Zustand des Befestigungselementes (14), der Stiel (32) derart gebogen ist, dass der Behandlungskopf (20) in eine von der Längsachse (L) des Handgriffs (12) verschiedene, vorzugsweise zur Längsachse (L) rechtwinklige Richtung weist.

## Claims

1. Tooth-cleaning device (40) having a handle (12), having a fastening element (14), which can be moved relative to the handle (12), and having an interchangeable interdental treatment part (30), which has a treatment head (20) borne by a stem (32) produced from wire (33), wherein the stem (32) is fixed on the handle (12) by virtue of the fastening element (14) being moved into a closed state, **characterized in that** the wire (33) at the end (34) of the stem (32), this end being directed away from the treatment head (20), is bent such that the wire (33) is guided at least in a doubled arrangement at least over a portion (36) of the stem (32).

2. Tooth-cleaning device (40) according to Claim 1, **characterized in that** a free end (44) of the wire (33), in the closed state of the fastening element (14), interacts with a stop surface (50) of the fastening element (14) and/or of the handle (12).

3. Tooth-cleaning device (40) according to Claim 1 or 2, **characterized in that** the stem (32), in the closed state of the fastening element (14), is bent over a bent portion (42) between the portion (36), in which the wire (33) is guided in a doubled arrangement, and the treatment head (20).

4. Tooth-cleaning device (40) according to Claims 2 and 3, **characterized in that** the free end (44) of the wire (33) is located at the bent portion (42).

5. Tooth-cleaning device (40) according to one of the preceding claims, **characterized in that** the wire (33) is formed by at least two strands which are twisted together.

6. Tooth-cleaning device (40) according to Claim 5, **characterized in that** the strands of the wire (33) - prior to twisting and without any coating - have a diameter of less than or equal to 0.25 mm.

7. Tooth-cleaning device (40) according to one of the preceding claims, **characterized in that** the portion (36), in which the wire (33) is guided at least in a doubled arrangement, is between 5 mm and 25 mm in length, preferably between 7 mm and 15 mm.

8. Tooth-cleaning device (40) according to one of the preceding claims, **characterized in that** the fastening element (14), in the closed state, clamps the portion (36), in which the wire (33) is guided at least in a doubled arrangement, on the handle (12).

9. Tooth-cleaning device (40) according to one of the preceding claims, **characterized in that,** in an open state of the fastening element (14), the portion (36), in which the wire (33) is guided in a doubled arrangement, can be introduced into the handle (12) in the longitudinal direction (L) of the latter and, in the closed state of the fastening element (14), the stem (32) is bent such that the treatment head (20) is oriented in a direction which deviates from the longitudinal axis (L) of the handle (12) and is preferably at right angles to the longitudinal axis (L).

## Revendications

1. Appareil de nettoyage interdentaire (40) avec une poignée (12), un élément de fixation (14) mobile par rapport à la poignée (12) et une pièce de traitement interdentaire remplaçable (30), qui comprend une tête de traitement (20) portée par une tige (32) fabriquée en fil (33), dans lequel la tige (32) est fixée dans un état fermé sur la poignée (12) par un mouvement de fermeture de l'élément de fixation (14), **caractérisé en ce que** le fil (33) est replié, à son extrémité (34) éloignée de la tête de traitement (20), de telle manière que le fil (33) soit guidé au moins en double au moins sur une partie (36) de la tige (32).

2. Appareil de nettoyage interdentaire (40) selon la revendication 1, **caractérisé en ce qu'**une extrémité libre (44) du fil (33) coopère, à l'état fermé de l'élément de fixation (14), avec une face de butée (50) de l'élément de fixation (14) et/ou de la poignée (12).

3. Appareil de nettoyage interdentaire (40) selon la revendication 1 ou 2, **caractérisé en ce que** la tige (32), à l'état fermé de l'élément de fixation (14), est repliée en une partie recourbée (42) entre la partie (36) dans laquelle le fil (33) est guidé en double et la tête de traitement (20).

4. Appareil de nettoyage interdentaire (40) selon la revendication 2 et 3, **caractérisé en ce que** l'extrémité libre (44) du fil (33) se trouve près de la partie recourbée (42).

5. Appareil de nettoyage interdentaire (40) selon l'une quelconque des revendications précédentes, **caractérisé en ce que** le fil (33) est formé par au moins deux filaments torsadés l'un avec l'autre.

6. Appareil de nettoyage interdentaire (40) selon la revendication 5, **caractérisé en ce que** les filaments du fil (33) - avant la torsion et sans revêtement - présentent un diamètre inférieur ou égal à 0,25 mm.

7. Appareil de nettoyage interdentaire (40) selon l'une quelconque des revendications précédentes, **caractérisé en ce que** la partie (36), dans laquelle le fil (33) est guidé au moins en double, a une longueur comprise entre 5 mm et 25 mm, de préférence entre 7 mm et 15 mm.

8. Appareil de nettoyage interdentaire (40) selon l'une quelconque des revendications précédentes, **caractérisé en ce que** l'élément de fixation (14) serre sur la poignée (12), à l'état fermé, la partie (36) dans laquelle le fil (33) est guidé au moins en double.

9. Appareil de nettoyage interdentaire (40) selon l'une quelconque des revendications précédentes, **caractérisé en ce que** la partie (36), dans laquelle le fil (33) est guidé en double, peut être insérée dans la poignée (12) dans la direction longitudinale (L) de celle-ci dans un état ouvert de l'élément de fixation (14) et, dans l'état fermé de l'élément de fixation (14), la tige (32) est repliée de telle manière que la tête de traitement (20) soit orientée dans une direction différente de l'axe longitudinal (L) de la poignée (12), de préférence dans une direction perpendiculaire à l'axe longitudinal (L).
